Europäisches Patentamt

European Patent Office

Office européen des brevets

(11) Veröffentlichungsnummer: **0 369 090**

**A1**

(12) **EUROPÄISCHE PATENTANMELDUNG**

(21) Anmeldenummer: **88810763.8**

(22) Anmeldetag: **08.11.88**

(51) Int. Cl.⁵: **F16K 39/02, F16K 31/06**

(43) Veröffentlichungstag der Anmeldung:
**23.05.90 Patentblatt 90/21**

(84) Benannte Vertragsstaaten:
**AT BE CH DE ES FR GB GR IT LI LU NL SE**

(71) Anmelder: **REFRIGERATING MACHINE
CONTROLS AG (RMC AG)
Seestrasse 16
CH-8712 Stäfa(CH)**

(72) Erfinder: **Pulli, Guiseppe
Kreuzstrasse 42
CH-8712 Stäfa(CH)**

(74) Vertreter: **Punschke, Edgar Patentanwalt
Löwenstrasse 1
CH-8001 Zürich(CH)**

(54) **Stetiges Regelventil mit Druckkompensation.**

㋨ Ein stetiges Regelventil mit Druckkompensation besitzt eine axial verstellbarer Spindel (2) zum Verstellen von Ventilöffnungen zwischen mindestens einem Ventileinlass (3), einer Ventilkammer (6), einem Druckraum (6A) und mindestens einem Ventilauslass (4). Die Ventilkammer (6) steht über eine abgedichtete Zylinderkolbenführung (15, 16, 17), die sich zwischen der Ventilspindel (2) und dem Ventilgehäuse (1) befindet, mit dem als Kompensationsdruckkammer dienenden Druckraum (6A, 18) in Verbindung. Unterstützt wird die Wirkung des Kolbens (15) durch eine Druckausgleichsbohrung (22) in der Ventilspindel (2). Die Bohrung verbindet den Ventilauslass-seitigen Druckraum (6A) mit der Kompensationsdruckkammer (18). Die zur Verstellung erforderlichen Kräfte sind für dieses Ventil ungewöhnlich niedrig. Das Schaltverhalten ist sehr sanft und gleichmässig über den gesamten Stellbereich.

Fig.1

## STETIGES REGELVENTIL MIT DRUCKKOMPENSATION

Die Erfindung betrifft ein stetiges Regelventil mit Druckkompensation, gemäss dem Oberbegriff des Patentanspruchs 1. Bevorzugte Anwendungen dieses Ventils liegen im Bereich von Heizungs-, Lüftungs-, Kälte- und Klimatechnik.

Bekannt sind Regelventile dieser Art mit einer druckkompensierten Ventilspindel, die durch einen Stellantrieb innerhalb eines Ventilkörpers axial verschiebbar ist und damit eine Verstellung der Durchflussmenge eines flüssigen oder gasförmigen Mediums bewirkt. Im Bereich der Ventilspindel sind innerhalb des Ventilgehäuses mit unterschiedlichen Drücken beaufschlagte Ventilkammern gegeneinander abzudichten. Die Abdichtung wird bei bekannten Ventilen im allgemeinen durch einen Metallbalg erreicht, welcher jedoch konstruktiv und fabrikationstechnisch aufwendig ist. Ausserdem ist die ihm eigene Federcharakteristik am Einstellverhalten der Ventilspindel eines druckkompensierten Regelventils beteiligt, wodurch der Verlauf des Ventilhubs in Abhängigkeit von der Antriebskraft des Stellantriebs beim Oeffnen bzw. Schliessen des Ventils relativ stark unterschiedlich ausfallen kann.

Diese unterschiedliche Hystereseabhängigkeit ist ein wesentlicher Grund, weshalb die Reproduzierbarkeit der Einstellung bzw. die Präzision der Ventileinstellung für bestimmte Anwendungen unbefriedigend ist. Gegebenenfalls müssen daher bei bekannten Regelventilen Abweichungen in der Ventilstellung durch eine Nachführregelung auf den vorgegebenen Sollwert korrigiert werden. Dies hat jedoch einen an sich unerwünschten zusätzlichen Bau- und Betriebsaufwand zur Folge.

Es ist Aufgabe der vorliegenden Erfindung, ein Regelventil mit einem verbesserten Hystereseverhalten zu schaffen, welches die oben genannten Nachteile bekannter Regelventile mit Balgdichtung nicht aufweist und damit eine genauere Durchflussregelung erlaubt, und welches mit geringerem Aufwand herzustellen ist als bekannte Regelventile.

Diese Aufgabe wird erfindungsgemäss durch ein Regelventil mit den im Patentanspruch 1 definierten Merkmalen gelöst.

Der Vorteil dieser Lösung liegt in erster Linie in einer wesentlichen Verbesserung des Schaltverhaltens, insbesondere in einer engeren Hysterese für die Abhängigkeit des Ventilhubs von der Antriebskraft bei Auf- und Zu-Verstellungen. Der Verstellvorgang erfolgt ausserordentlich sanft, ohne mechanische oder akustische Schwingungen. Das Ventil zeigt daher ein sehr sicheres Regelverhalten, und es lässt sich demgemäss für hochpräzise Regelaufgaben einsetzen. Vorteilhaft ist auch die vereinfachte Konstruktion im Hinblick auf die gegenseitige Abdichtung von Druckräumen, welche eine weniger aufwendige Herstellung zur Folge hat, als dies z.B. für Regelventile mit Balgendichtung der Fall ist. Von besonderem Vorteil ist ferner die gegenüber vergleichbaren bekannten Ventilen erheblich geringere Antriebsleistung für den Verstellvorgang.

Einzelheiten und weitere Vorteile der Erfindung werden im folgenden anhand von Ausführungsbeispielen mit Hilfe der Zeichnungen näher beschrieben. Es zeigen:

Fig.1 ein Ausführungsbeispiel des erfindungsgemässen Regelventils in Schnittdarstellung, und

Fig.2 die Abhängigkeit des Ventilhubs von der Motorkraft. für bekannte Ventile (A) und für das Ausführungsbeispiel (B).

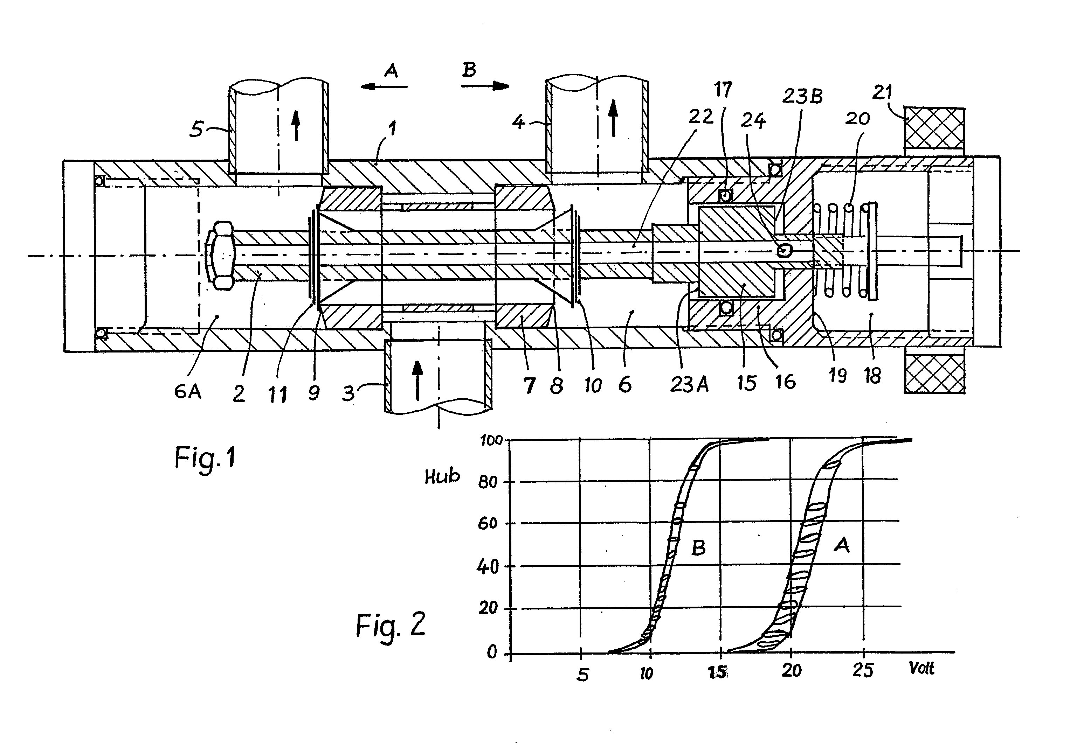

Das als Beispiel beschriebene Regelventil besteht gemäss Fig. 1 aus einem Ventilgehäuse 1, in welchem eine Ventilspindel 2 axial verschiebbar eingesetzt ist. Als nicht einschränkendes Beispiel ist ein Dreiwege-Ventil dargestellt, dessen Ventilgehäuse 1 eine Einlassöffnung 3 und zwei wechselseitig betätigbare Auslassöffnungen 4 und 5 besitzt.

Im Uebergangsbereich zwischen der Einlassöffnung 3 und dem Innenraum des Ventilgehäuses, der Ventilkammer 6, befindet sich ein Strömungskörper 7, welcher zur Beruhigung und Stabilisierung der in die Ventilkammer gelangenden Strömung dient. Die Endflächen dieses Strömungskörpers sind als kreisförmige Schneidflächen 8 und 9 ausgebildet, welche die Funktion eines Ventilsitzes übernehmen und mit Ventiltellern zusammenwirken, die als Tellerfedern 10 und 11 ausgebildet sind und auf der Spindel 2 angebracht sind.

Dazu sind auf der Spindel 2 zwei Tellerfeder-Pakete 10 und 11 eingesetzt, die einen etwas grösseren axialen Abstand voneinander aufweisen, als es dem axialen Abstand der Schneidflächen 8 und 9 am Strömungskörper 7 entspricht. Gemeinsam mit den Schneidflächen 8 und 9 bilden die Tellerfedern regelbare Ventilkörper zur Verteilung des durch die Einlassöffnung 3 einströmenden Mediums auf die beiden beiden Auslassöffnungen 4 und 5.

Betätigt werden die beiden Ventile 8/10 und 9/11 in gegenseitiger Abhängigkeit durch axiales Verschieben der Ventilspindel 2. Die Verschiebbarkeit ist gewährleistet durch eine kolbenartige Ausbildung 15 und einen entsprechenden Führungszylinder in einem Einsatz 16, der funktionell mit dem Ventilgehäuse 1 verbunden, z.B. in diesen eingeschraubt ist. Abgedichtet wird die Zylinderkolben-Verbindung mit einer Ringdichtung 17, die im Beispiel in einer Ringnut innerhalb des Einsatzes 16 eingelassen ist.

Die Ventilspindel 2 ist ferner mit einer zentralen Bohrung 22 versehen, welche einen Druckraum 6A im Bereich der zweiten Auslassöffnung 5 mit einer Kompensationsdruckkammer 18 im äusseren Bereich des Führungszylinderraums verbindet. Die Verbindung Kompensationsdruckkammer 18 erfolgt über eine Oeffnung 24 in der zentralen Bohrung 22 der Ventilspindel 2. Durch die Bohrung 22 findet ein permanenter Druckausgleich zwischen dem Druckraum 6A und der Kompensationsdruckkammer 18 statt.

Die Verstellung der Ventilspindel und damit das Oeffnen bzw. Schliessen der Ventile 8/10 und 9/11 erfolgt durch einen Fremdantrieb, der im Beispiel als Hubmagnet ausgebildet ist und in Fig. 1 als Block 21 dargestellt ist. Abweichend vom gezeigten Beispiel können auch andere geeignete Hubantriebe verwendet werden. Der Hubantrieb ist an eine in der Figur nicht dargestellte Regelung angeschlossen, mit deren Hilfe der Ventilhub entsprechend den jeweils gewünschten Durchflussmengen ein- bzw. nachgestellt wird.

Die im Beispiel in Pfeilrichtung A wirkenden Antriebskraft des Hubmagneten wird durch eine Feder 20 kompensiert, welche zwischen der Spindel 2 und stationären Gehäuseteilen, z.B. der Stirnfläche 19 gespannt ist. Die Feder kann auch im Bereich des Druckraumes 6A angeordnet sein. Sie übt auf die Spindel 2 eine axiale Kraft in Richtung B aus. Durch diese Anordnung ist einerseits die Spindel bezüglich der Antriebskräfte kompensiert, andererseits ergibt sich durch die Feder 20 eine vorteilhafte Unterstützung der Schliessfunktion für das Ventil 9/11, sobald die Versorgungsspannung für den Hubmagneten ausfällt.

Diese Schliessfunktion des Ventils 9/11 wird zusätzlich unterstützt durch den Druck des Mediums in der Ventilkammer 6 auf die innere wirksame Kolbenfläche 23A des Kolbens 15, bewirkt durch den Druckausgleich zwischen dem Druckraum 6A und der Kompensationsdruckkammer 18 über die zentrale Bohrung 22 und die Oeffnung 24.

Sind beide Ventile 9/11 und 8/10 geöffnet, bewirkt dieser Druckausgleich, dass auf die äussere wirksame Kolbenfläche 23B eine Kraftkomponente ausgeübt wird, welche der resultierenden Axialkraft des Mediums auf die beiden Tellerfedern 10 und 11 entgegenwirkt und diese kompensiert.

Wegen des oben erwähnten, durch den Kolben 15 und die Bohrung 22 bewirkten statischen Ausgleichs der auf die Ventilspindel 2 wirkenden Kräfte über den gesamten Verstellbereich genügt als Ventilantrieb ein Hubmagnet mit relativ geringer Leistung, im beschriebenen Ausführungsbeispiel mit ca. 50 % des Leistungsbedarfs für vergleichbare Ventile konventioneller Art. Dabei wurden vom Ventil Druckdifferenzen von z.B. 22 bar zwischen der Ventilkammer 6 und dem Druckraum 6A sicher beherrscht.

Durch eine kegelförmige Ausbildung der Ventilspindel nahe den Tellerfedern 10, 11 im Bereich, der innerhalb des Strömungskörpers 7 liegt, wird ein gutes dynamisches Verhalten, insbesonderere ein gleichmässiger und schwingungsfreier Verstellvorgang und damit ein gut regelbares Oeffnen und Schliessen mit kurzen Reaktionszeiten, ohne Gefahr des Nachschwingens, erreicht. Während des Verstellvorganges sowie im gesamten Arbeitsbereich des Ventils traten praktisch kein mechanisches Flattern und keine akustisches Schwingen auf.

Durch die beschriebenen Massnahmen wird die Ventilspindel 2 im gesamten Verstellbereich des Ventils perfekt kraftkompensiert. Dies konnte durch Messungen bestätigt werden. Die Schaltkurve für das Oeffnen des Ventils unterschied sich nicht wesentlich von derjenigen beim Schliessen des Ventils, wie dies in Fig. 2 B anhand einer Hysterese-Messkurve gezeigt ist. Die Kurve ist für unterschiedliche Druckbereiche praktisch gleichbleibend. Zum Vergleich ist die breitere Hysterese A eines vergleichbaren bekannten Ventils dargestellt.

**Ansprüche**

1. Stetiges Regelventil mit Druckkompensation, mit durch Fremdantrieb axial verstellbarer Spindel und mit durch die Spindel betägbaren Ventilöffnungen zwischen mindestens einem Ventileinlass (3), einer Ventilkammer (6), einem Druckraum (6A) und mindestens einem Ventilauslass (4), dadurch gekennzeichnet, dass die Ventilkammer (6) über eine abgedichtete Zylinderkolbenführung (15, 16, 17) zwischen der Ventilspindel (2) und dem Ventilgehäuse (1) mit dem als Kompensationsdruckkammer dienenden Druckraum (6A, 18) in Wirkverbindung steht.

2. Regelventil nach Anspruch 1, dadurch gekennzeichnet, dass die Ventilspindel (2) eine Druckausgleichsbohrung (22) zwischen dem Ventilauslass-seitigen Druckraum (6A) und der Kompensationsdruckkammer (18) aufweist.

3. Regelventil nach Anspruch 2, dadurch gekennzeichnet, dass der Druckraum (6A) und die Kompensationsdruckkammer (18) an entgegengesetzten Endbereichen der Ventilspindel (2) angeordnet sind, und dass die mit dem Ventileinlass (3) verbundene Ventilkammer (6) im mittleren Bereich der Ventilspindel (2) liegt.

4. Regelventil nach Anspruch 2, dadurch gekennzeichnet, dass zwischen dem Ventileinlass (3) und der Ventilkammer (6) ein zur Ventilspindel koaxialer Strömungskörper (7) angeordnet ist, welcher axial unbeweglich ist und dessen entgegengesetzten stirnseitigen Enden als je ein Ventilsitz (8; 9) ausgebildet sind, und dass auf der Spindel (2) angeordnete Ventiltellerfedern (10; 11) mit den Ventilsitzen zusammenwirken.

5. Regelventil nach Anspruch 1, dadurch gekennzeichnet, dass die wirksamen Kolbenflächen (23A, 23B) den druckwirksamen Ventilflächen zwischen den durch die Ventile (8,10; 9,11) getrennten Druckräumen (3, 6, 6A) entsprechen.

6. Regelventil nach Anspruch 1, dadurch gekennzeichnet, dass die Ventilspindel (2) im Bereich der Ventilöffnungen (8, 10; 9, 11) in Strömungsrichtung die Ventilöffnung verengende konusförmige Ausbildungen aufweist.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 190 846  (HERION) <br> * Insgesamt * <br> --- | 1-3,5 | F 16 K  39/02 <br> F 16 K  31/06 |
| X | FR-A-2 422 885  (DEBAYE) <br> * Insgesamt * <br> --- | 1-6 | |
| A | US-A-4 448 211  (SYOICHI YOSHIDA) <br> * Figur 4 * <br> ----- | 4 | |

| | | | RECHERCHIERTE SACHGEBIETE (Int. Cl.5) |
|---|---|---|---|
| | | | F 16 K |

Der vorliegende Recherchenbericht wurde für alle Patentansprüche erstellt

| Recherchenort | Abschlußdatum der Recherche | Prüfer |
|---|---|---|
| DEN HAAG | 10-07-1989 | VERELST P.E.J. |